# EUROPEAN PATENT APPLICATION

(11) **EP 4 575 767 A1**
(43) Date of publication of application: **25.06.2025**
(21) Application number: 24220860.1
(22) Date of filing: 18.12.2024
(51) Int. Cl.: G06F 8/65, G06F 8/71, B60R 16/02, H04L 67/01, H04L 67/00, H04W 4/40

(54) **VEHICLE FUNCTION SETTING SYSTEM, VEHICLE FUNCTION SETTING METHOD, AND VEHICLE**

(30) Priority: 18.12.2023 JP 2023213251
(71) Applicant: TOYOTA JIDOSHA KABUSHIKI KAISHA, Aichi-ken, 471-8571 (JP)
(72) Inventor: UCHIDA, Akito, TOYOTA-SHI, AICHI-KEN, 471-8571 (JP); KATO, Kazuki, TOYOTA-SHI, AICHI-KEN, 471-8571 (JP)
(74) Representative: Cabinet Beau de Loménie

(57) **Abstract**

A vehicle function setting system (20) is configured to set at least one control content to be executed by an in-vehicle control device (10) upon a provision of a predetermined function of the vehicle and includes a mobile terminal (30) on which an application that enables a user to select the control content is installed, and an in-vehicle storage device (17) that stores a plurality of options of the control content for each of a plurality of versions of the application. The mobile terminal (30) allows the user to select the control content from the options corresponding to the version of the installed application, and sends information indicating the control content selected by the user to the in-vehicle control device. The in-vehicle control device acquires the control content corresponding to the information from the mobile terminal from the in-vehicle storage device.

## Description

### Technical Field

The present disclosure relates to a vehicle function setting system and method to set a control content to be executed by an in-vehicle control device upon a provision of a predetermined function of the vehicle, and a vehicle that provides a predetermined function.

### Background

A conventionally known system updates software installed on a control device that executes control of a vehicle (see, for example, Japanese Patent Application Laid Open No. 2022-033188). The system notifies an information terminal of a user of the vehicle that there is a software update process (version up) when a download of an installation package of a new version of the software has been completed in the vehicle. Further, the system starts the software update process when it accepts at least an operation by the user to authorize a start of the update process and the vehicle is locked.

### Summary

According to the conventional system described above, the software installed on the control device may be updated to change a specification of a function provided in the vehicle ("upgrade" or "downgrade") without having the vehicle enter a maintenance factory and the like. However, the above system requires processes such as downloading the installation package, notifying to the user's information terminal, and accepting the operation to authorize the start of the update process by the user, before the software is actually updated. Further, the software update process is not executed unless the vehicle is locked. Therefore, the system described above makes it difficult to easily and quickly change the specification of the function provided in the vehicle.

A main object of the present disclosure is to enable easy and quick execution of the specification change of the function provided in the vehicle.

A vehicle function setting system of the present disclosure is configured to set at least one control content to be executed by an in-vehicle control device upon a provision of a predetermined function of the vehicle. The vehicle function setting system includes a mobile terminal on which an application that enables a user of the vehicle to select the control content is installed, and an in-vehicle storage device that is mounted in the vehicle and stores a plurality of options of the control content for each of a plurality of versions of the application. The mobile terminal allows the user to select the control content from the plurality of options corresponding to the version of the installed application, and sends information indicating the control content selected by the user to the in-vehicle control device. The in-vehicle control device acquires the control content corresponding to the information from the mobile terminal from the in-vehicle storage device.

A vehicle function setting method of the present disclosure sets at least one control content to be executed by an in-vehicle control device upon a provision of a predetermined function of a vehicle. The method includes: installing an application that allows a user of the vehicle to select the control content on a mobile terminal, and storing a plurality of options of the control content for each of a plurality of versions of the application in an in-vehicle storage device mounted in the vehicle; allowing the user to select the control content from the plurality of options corresponding to the version of the application installed on the mobile terminal, and sending information indicating the control content selected by the user on the mobile terminal from the mobile terminal to the in-vehicle control device, and making the in-vehicle control device acquire the control content corresponding to the information from the mobile terminal from the in-vehicle storage device.

A vehicle of the present disclosure provides a predetermined function and allows a mobile terminal in which an application is installed a selection of a control content to be executed upon a provision of the function. The vehicle includes: an in-vehicle storage device that stores a plurality of options of the control content for each of a plurality of versions of the application; and an in-vehicle control device that acquires the control content corresponding to information from the mobile terminal from the in-vehicle storage device and executes the control content upon the provision of the function. The selection of the option not selectable by an execution of the application of a previous version is allowed when the application installed on the mobile terminal is upgraded.

### Brief Description of Drawings

Fig. 1 is a schematic configuration diagram illustrating the vehicle function setting system of the present disclosure;
Fig. 2 is a schematic configuration diagram illustrating the vehicle of the present disclosure;
Fig. 3 is an explanatory view of an information display screen of a meter of the vehicle of the present disclosure;
Fig. 4 is an explanatory view illustrating a table stored in the in-vehicle storage device of the vehicle function setting system of the present disclosure and in a storage device of a management device;
Fig. 5 is an explanatory view illustrating details of an upgrade of an application in the vehicle function setting system of the present disclosure and software of the vehicle;
Fig. 6 is an explanatory view illustrating the table stored in the in-vehicle storage device and in the storage devices of the management device of the vehicle function setting system of the present disclosure;
Fig. 7 is a flowchart illustrating a routine executed by the management device of the vehicle function setting system of the present disclosure;
Fig. 8 is a flowchart illustrating a routine executed by a mobile terminal of the vehicle function setting system of the present disclosure;
Fig. 9 is an explanatory view illustrating an example of a setting screen displayed on a display of the mobile terminal of the vehicle function setting system of the present disclosure;
Fig. 10 is an explanatory view illustrating another example of a setting screen displayed on the display of the mobile terminal of the vehicle function setting system of the present disclosure;
Fig. 11 is a flowchart illustrating another routine executed by the management device of the vehicle function setting system of the present disclosure; and
Figure 12 is a flowchart illustrating a routine executed by the in-vehicle control device of the vehicle of the present disclosure.

### Description of Embodiments

The following describes some aspects of the present disclosure with reference to drawings.

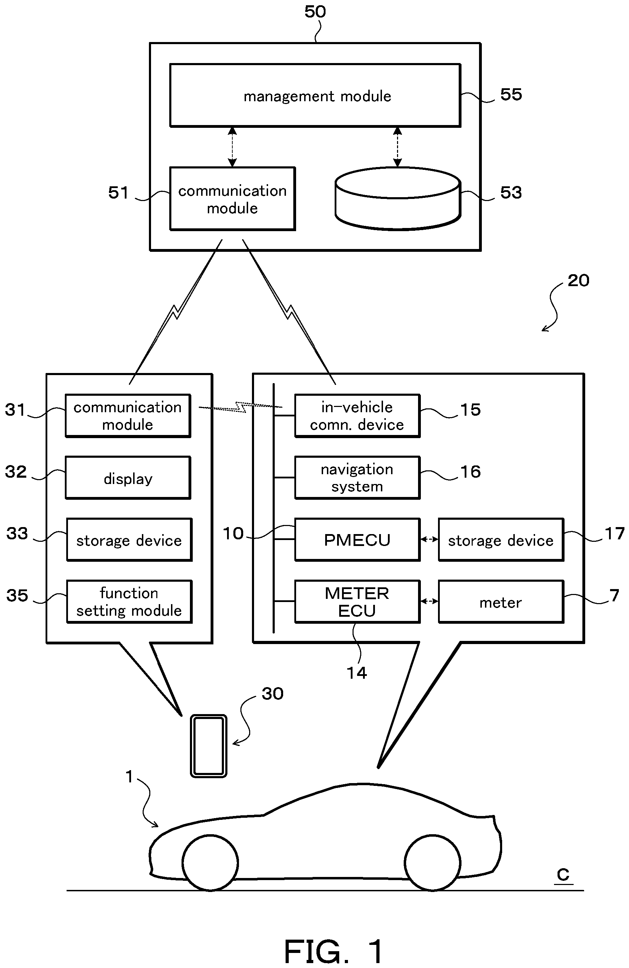

Fig. 1 is a schematic configuration diagram of a vehicle function setting system 20 of the present disclosure. The vehicle function setting system 20 shown in Fig. 1 allows a user of vehicle 1 to set, from a mobile terminal 30, a plurality of control contents to be performed by the vehicle 1 upon a provision of a predetermined function of the vehicle 1. The user of the vehicle 1 is allowed to use the vehicle function setting system 20 by logging into a function setting application on the mobile terminal 30 in which the function setting application (program) provided by a manufacturer of the vehicle 1, for example, has been installed. Further, as shown in Fig. 1, the vehicle function setting system 20 of this embodiment includes a management server (management device) 50, which is established and managed by, for example, the manufacturer of the vehicle 1 and exchanges information with the vehicle 1 and the mobile terminal 30.

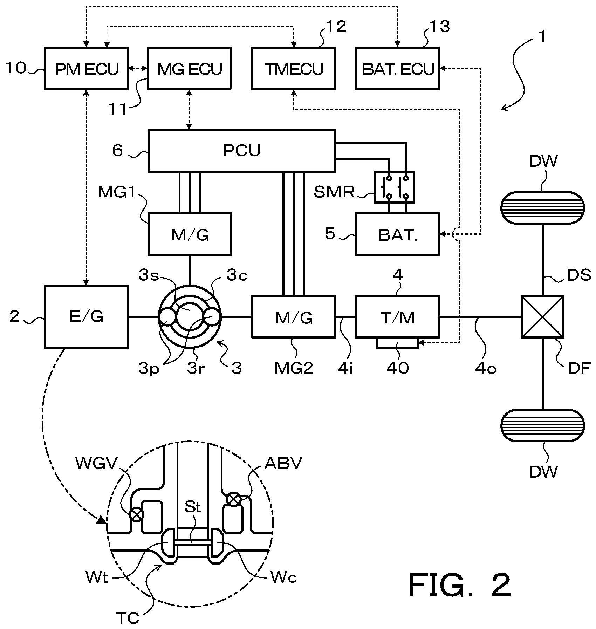

As shown in Fig. 2, the vehicle 1 to which the vehicle function setting system 20 is applied is a hybrid electric vehicle that includes an engine (internal combustion engine) 2, a single pinion planetary gear 3 as a power distribution mechanism, motor generators MG1 and MG2, both of which are synchronous generator motors (three-phase AC motors), a transmission mechanism 4, a battery ("power storage device") 5, a power control unit ("PCU") 6 that exchanges electric power with the battery 5 and drives the motor generators MG1 and MG2. The vehicle 1 may be a so-called one-motor hybrid electric vehicle, a vehicle that includes only engine 2 as a drive source, or a battery electric vehicle (BEV).

The engine 2 of the vehicle 1 is the internal combustion engine that converts the reciprocating motion of pistons (not shown) resulting from combustion of a mixture of hydrocarbon fuel (gasoline) and air in a plurality of combustion chambers into rotational motion of a crankshaft (output shaft) . The engine 2 is not limited to gasoline engines. The engine 2 also includes a supercharger TC that compresses intake air using the energy of exhaust gas and an intercooler (not shown) that cools the air compressed by the supercharger TC. In this embodiment, the supercharger TC is a turbocharger, with a turbine wheel Wt rotatable in a turbine housing formed in an exhaust pipe of the engine 2 and a compressor wheel Wc rotatable in a compressor housing formed in an intake pipe of the engine 2, a turbine shaft St that integrally connects the turbine wheel Wt and the compressor wheel Wc, a wastegate valve WGV, and an air bypass valve ABV.

The planetary gear 3 is a differential rotation mechanism that includes a sun gear 3s, a ring gear 3r, and a planet carrier 3c that rotatably supports a plurality of pinion gears 3p. The sun gear 3s is connected to a rotor of the motor generator MG1, and the planet carrier 3c is connected to the crankshaft of the engine 2 via a damper mechanism (not shown) . The transmission mechanism 4 is, for example, a 4-speed automatic transmission, including an input shaft 4i connected to the ring gear 3r of the planetary gear 3 and a rotor of the motor generator MG2, an output shaft 4o connected to the left and right drive wheels DW via a differential gear DF and a pair of drive shafts DS, a CR -CR type, Ravigneaux-type or Simpson-type composite planetary gear mechanism (not shown), each including a plurality ( for example, two of each) of clutches and brakes (all not shown). The clutches and brakes of the transmission mechanism 4 are hydraulic engagement elements that operate by receiving and discharging hydraulic fluid by the hydraulic controller 40. The clutches and brakes are engaged or released in a predetermined manner by the hydraulic controller 40 such that four power transmission paths in the forward rotation direction and one in a backward rotation direction are formed between the input shaft 4i and the output shaft 4o, that is, forward and backward steps from first to fourth speed steps.

The motor generator MG1 is mainly driven by the engine 2 under load operation and operates as a generator to convert at least a part of the power from the engine 2 into electric power. The motor generator MG2 is connected to the left and right drive wheels DW via the transmission mechanism 4, differential gear DF, and the pair of drive shafts DS. The motor generator MG2 operates mainly as an electric motor that is driven by at least one of the electric power from the battery 5 and the electric power from the motor generator MG1 so as to output drive torque to the drive shafts DS. Further, the motor generator MG2 outputs regenerative braking torque to the drive wheels DW when the vehicle 1 is braked.

This allows the vehicle 1 to output the power (torque) from at least one of the engine 2 and the motor generator MG2 to the drive wheels DW via the output shaft 4o of the transmission mechanism 4. In vehicle 1, when a shift lever (not shown) is set to a manual position (sports position), by operating the shift lever or shift paddles, the power (torque) is allowed to be output stepwise to the output shaft 4o of the transmission mechanism 4 in accordance with a predetermined plurality (for example, 10 stages) of virtual gearshift stages.

The battery 5 is a lithium-ion rechargeable battery or a nickel-metal hydride rechargeable battery. The PCU 6 is connected to the battery 5 via a system main relay SMR. The PCU 6 includes a first inverter to drive the motor generator MG1 and a second inverter to drive the motor generator MG2, a boost converter that enables boosting the electric power from the battery 5 and step-down the electric power from the side of the motor generators MG1 and MG2, and the like (none of which are shown in the figures).

Further, as shown in Fig. 2, the vehicle 1 includes a power management electronic control unit (hereinafter referred to as "PMECU"), a motor electronic control unit (hereinafter referred to as "MGECU") 11, a transmission electronic control unit (hereinafter referred to as "TMECU") 12, a battery electronic control unit (hereinafter referred to as "battery ECU") 13, and a meter electronic control unit (hereinafter referred to as "meter ECU") 14 (see Figure 1) as an in-vehicle control device. The PMECU 10, the MGECU 11, the TMECU 12, the battery ECU 13, and the meter ECU 14 all include a microcomputer with CPU, ROM, RAM, input/output interface, and the like, various drive circuits, various logic ICs, and the like, which are not shown in the figures.

The PMECU10 acquires information detected by various sensors and exchanges information with the above ECUs 11, 12, 13, and the like, controls the engine 2 including the supercharger TC, and also controls the motor generators MG1 and MG2 in cooperation with the MGECU 11. The control function of the engine 2 of the PMECU10 may be assigned to a dedicated electronic control unit (ECU) . The MGECU 11 controls the PCU 6 based on information detected by various sensors and command signals from PMECU10, and the like. The TMECU 12 controls the hydraulic controller 40 (transmission mechanism 4) based on information detected by various sensors and command signals from the PMECU10, and the like. The Battery ECU 13 acquires voltage between terminals of battery 5, charge/discharge current, temperature, and the like, and calculates SOC, allowable charge power Win, allowable discharge power Wout, and the like of the battery 5 based on these physical quantities. The meter ECU 14 controls a meter (digital meter) 7 (see Fig. 1) mounted on the dashboard (not shown) of the vehicle 1.

The PMECU 10 also exchanges information with the management server 50 via an in-vehicle communication device 15 and with a navigation system 16 of the vehicle 1, as shown in Fig. 1. Further, the PMECU 10 is connected to a storage device (in-vehicle storage device) 17 that stores information necessary for providing the above predetermined function. Here, the predetermined function in this embodiment is a function to adapt a power characteristics of the vehicle 1 and an operation mode of auxiliary equipment, and the like, to a circuit driving when the vehicle 1 is driven on a driving road of a circuit C. That is, the user of the vehicle 1 is allowed to shift a driving mode of the vehicle 1 to a circuit mode from the mobile terminal 30 via the vehicle function setting system 20, and to set a predetermined plurality of control contents in the circuit mode.

In this embodiment, while the driving mode is the circuit mode and the vehicle 1 is driven on the circuit C, an anti-lag control is executed to suppress occurrence of a turbo lag in the supercharger TC of the engine 2 in accordance with a request of the user. The anti -lag control increases an intake air amount (target value) of the engine 2 compared to a normal idle operation (self-sustaining operation) and delays ignition timing in each combustion chamber by an amount of delay corresponding to an increase amount of the intake air amount. When such anti-lag control is executed, a fuel cutoff in engine 2 is prohibited and the wastegate valve WGV and the air bypass valve ABV are fully closed. Further, in the engine 2, the increase amount of the intake air amount can be varied in several steps so as to increase filling efficiency from for example 10% under a normal condition to for example 20-80%. The user of the vehicle 1 is then allowed to specify the presence or absence of anti-lag control and a level of the anti-lag control (the amount of bulked-up intake air) from the mobile terminal 30 when the vehicle 1 is driven on a circuit.

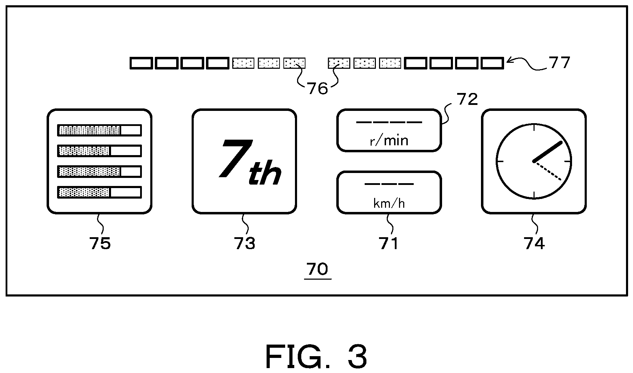

Further, while the driving mode is the circuit mode and the vehicle 1 is driven on the circuit C, the meter ECU 14 makes the meter 7 display an information display screen 70 dedicated to the circuit driving, as shown in Fig. 3. The information display screen 70 for the circuit driving includes a vehicle speed display section 71, a rotational speed display section 72, a general-purpose display section 73 for displaying various information including the gearshift stage (virtual gearshift stage), a display section 74 for engine water temperature, oil temperature, oil pressure, atmospheric pressure, and the like, a display section 75 for the level of the anti-lag control and the like, and a shift guide indicator 77 with a plurality of light emitting sections 76 arranged in a straight line.

The meter ECU 14 makes the two light emitting sections 76 at both ends of the shift guide indicator 77 emit light when a shift-up timing approaches in response to an increase in a rotational speed of the engine 2. Further, the meter ECU 14 makes the inner pair of light emitting sections 76 emit light in turn as the time passes. Furthermore, when the shift-up timing arrives, the meter ECU 14 makes the two light emitting sections 76 in the center of the shift guide indicator 77, that is, all the light emitting sections 76, emit light. In this embodiment, upon the circuit driving of the vehicle 1, the user of the vehicle 1 is allowed to specify from the mobile terminal 30 the rotational speed of the engine 2 (shift-up rotational speed) when all of the light emitting sections 76 of the shift guide indicator 77 are emitted, and a time that defines a light emission start timing of the light emitting sections 76 at both ends of the shift guide indicator 77.

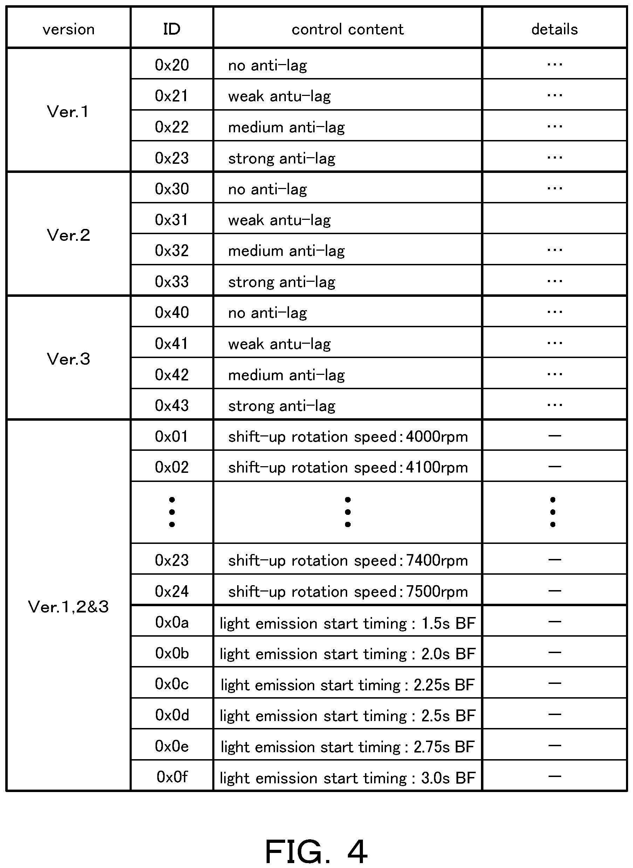

Fig. 4 is an explanatory view illustrating a control content setting table that stores the information necessary to provide the above predetermined function that adapt the power characteristics and the like of the vehicle 1 to the circuit driving. The control content setting table is created in advance at a design phase of the vehicle 1 and stored in the storage device 17 before the vehicle 1 is on sale (delivered). As shown in the figure, the control content setting table stores a plurality of options (choices) for each of the control contents, including the anti-lag control described above and the setting of the shift guide indicator 77 on the information display screen 70 of the meter 7 (display mode of the meter 7) and the like, each of the options associated with a unique ID.

The multiple options for the anti-lag control include "no anti-lag", "weak anti-lag", "medium anti-lag", and "strong anti-lag" in Fig. 4. These specify different levels of the anti-lag control from each other. In addition, the "details column" of the control content table describes target values and execution conditions for the increase amount of the intake air amount, a speed limiter release speed, an idle speed and the like when the option is executed as the control content. The plurality of options for the shift-up rotational speed of the shift guide indicator 77 are "shift-up rotational speed: 4000rpm"... "shift-up rotational speed: 7500rpm" in Fig. 4, and the plurality of options for the light emission start timing of the shift guide indicator 77 are "light emission start timing: 1.5s before"... "light emission start timing: 3.0s before" in Fig. 4. That is, the plurality of options specify different control content from each other and have their own unique IDs that differ from each other.

On the other hand, for the function setting application to be installed on the mobile terminal 30 of the user and the like of the vehicle 1, a plurality of versions (for example, three versions) are scheduled to be upgraded at the design phase of the vehicle 1. For the anti-lag control, the same set of the plurality of options for each of the plurality of versions of the application (version 1, version 2, and version 3) are pre-assigned at a manufacturing stage of the vehicle 1. That is, for the anti-lag control, "no anti-lag", "weak anti-lag", "medium anti-lag" and "strong anti-lag" are assigned to each of the plurality of versions of the function setting application when the vehicle 1 is delivered to the user. On the other hand, the plurality of options associated with the setting of the shift guide indicator 77 are defined identically among the plurality of versions of the application, as shown in Fig. 4.

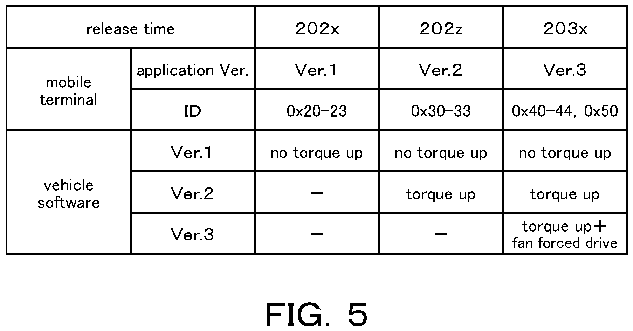

Further, in order to improve the performance of the engine 2 and the motor generators MG1 and MG2 as the drive source in the vehicle 1, at least one predetermined software installed in the PMECU 10 is scheduled to be upgraded a plurality of times (for example, three times) in the design phase, as shown in Fig. 5. As shown in Fig. 5, when the predetermined software is upgraded from the version 1 to the version 2, the torque output from the engine 2 and the like to the output shaft 4o of the transmission mechanism 4 is increased. When the predetermined software is upgraded from the version 2 to the version 3, the torque output from the engine 2 and the like to the output shaft 4o is further increased. In this embodiment, the predetermined software is upgraded for a fee at the maintenance factory and the like. However, the predetermined software of the vehicle 1 may be upgraded by OTA using wireless communication. Further, the function setting application is upgraded in accordance with the upgrade of the predetermined software of the vehicle 1, and the upgraded function setting application can be installed on the mobile terminal 30.

When the predetermined software of the vehicle 1 is upgraded, at least one of writing of additional contents to the plurality of options that correspond to the version of the function setting application after the version of the upgraded predetermined software, and an addition of new options is executed with respect to the control content setting table stored in the storage device 17. In more detail, when the predetermined software of the vehicle 1 is upgraded from the version 1 to the version 2, the additional content "torque up" and a torque increase amount that correspond to a torque increase of the drive source are written in the plurality of the options of the anti - lag control corresponding to the version 2 and the version 3 of the function setting application in the control content setting table stored in the storage device 17.

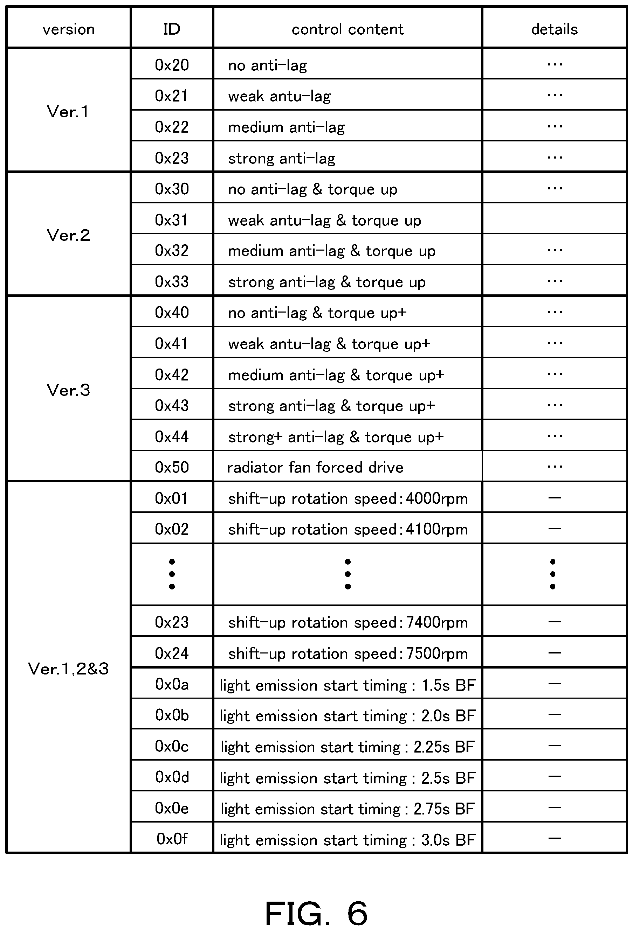

Further, when the predetermined software is upgraded from the version 2 to the version 3, as shown in Fig. 6, the additional content "torque up +" and a torque increase amount that correspond to a further torque increase of the drive source are written to the plurality of options of the anti-lag control corresponding to the version 3 of the function setting application in the control content setting table stored in the storage device 17 of the vehicle 1. When the predetermined software is upgraded from the version 2 to the version 3, a new option "radiator fan forced drive (ID: 0x50)" is added to the control content setting table stored in the memory device 17, as shown in Fig. 6. The new option "radiator fan forced drive" makes the PMECU 10 forcibly activate the electric fan (not shown) provided in a radiator of the vehicle 1 when the vehicle 1 stops in a pit after completion of the circuit driving.

The mobile terminal 30 used for setting the control contents described above is, in this embodiment, a smartphone including a communication module 31, a display 32, a microphone, a SoC, ROM, RAM, a GPS module (location information device), a storage device (terminal storage device) 33 such as a flash memory and the like, a battery, and the like. However, the mobile terminal 30 may also be a tablet terminal. A function setting application is installed in the mobile terminal 30, as described above. When the function setting application is installed on the mobile terminal 30, the above plurality of options corresponding to the version of the installed function setting application are stored in the storage device 33, each associated with a unique ID. For example, when the version of the function setting application installed on the mobile terminal 30 is the version 2, the storage device 33 stores IDs and options of 0x30-0x33, 0x01-0x24 and 0x0a-0x0f.

As shown in Fig. 1, a function setting module 35 is constructed in the mobile terminal 30 through the cooperation of the function setting application (software) and hardware such as a SoC. The function setting module 35 executes the function setting application and also exchanges information with the management servers 50 through wireless communication (high-speed data communication) via the communication module 31. Further, the function setting module 35 controls the display unit 32 to display a setting screen (UI) that allows the user to select the plurality of control contents. The display 32 includes a touch panel LCD panel or a touch panel organic EL panel.

The management server 50 includes a computer with CPU, ROM, RAM, input/output interfaces, and the like, a communication module 51 for communication with the in-vehicle communication device 15 of the vehicle 1 and the mobile terminal 30, a storage device 53 for storing various information, and the like. As shown in Fig. 1, a management module 55 is constructed in the management server 50 through the cooperation of hardware such as CPU, ROM, and RAM, and programs installed in advance.

The memory device 53 of the management server 50 stores, for each type of vehicle, the same control content setting tables as those stored in the memory device 17 and the like of the vehicle 1 and other vehicles that, like the vehicle 1, have the function to adapt the power characteristics and the like to circuit driving. When the predetermined software of the vehicle 1 and the like is upgraded, at least one of writing of additional contents to the plurality of options that correspond to the version of the function setting application after the version of the upgraded predetermined software, and an addition of new options is executed with respect to the control content setting table stored in the storage device 53. Further, the storage device 53 stores a database that associates a user ID (user identification information) assigned to the user (owner) of the vehicle 1 and the like by the manufacturer of the vehicle 1 and the like with the user's contact information, circuit usage status (usage history) , billing status, and other information. The management module 55 executes various processes related to the provision of function to adapt the power characteristics and the like of the vehicle 1 to the circuit driving based on the information and the like stored in the storage device 53.

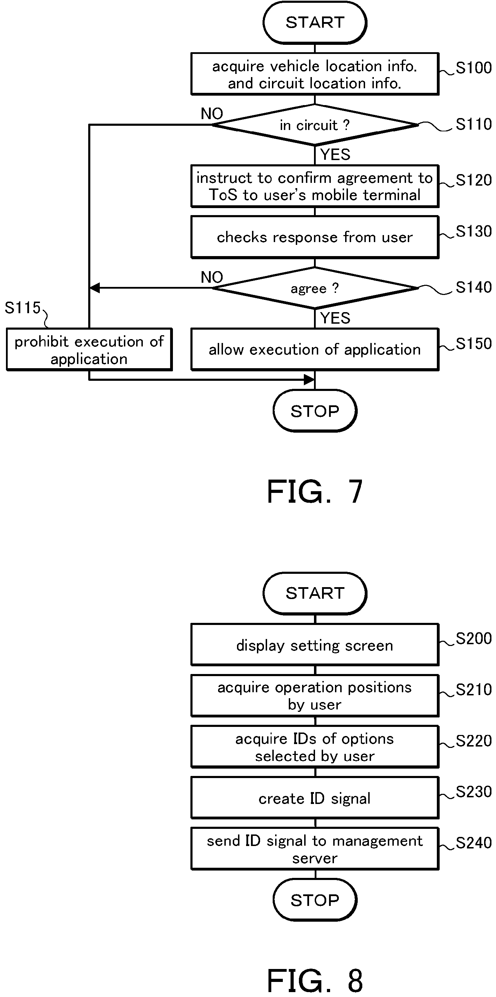

Next, with reference to Figs. 7 to 12, a procedure for setting the control contents to be executed in the vehicle 1 by the vehicle function setting system 20 upon the provision of the function to adapt the power characteristics and the like of the vehicle 1 to the circuit driving will be described.

After arriving at the Circuit C and stopping the vehicle 1, the user of the vehicle 1 completes the necessary procedures, etc. at the Circuit C office. After completion of the procedure, a procedure completion notification including the user ID of the user of vehicle 1 is sent to the management server 50 from the Circuit C side. Upon receipt of the procedure completion notification by the management server 50, the management module 55 of the management server 50 requests the in-vehicle communication device 15 of the vehicle 1 via the communication module 51 to send a vehicle location information of the vehicle 1, as shown in Fig. 7, and acquires the vehicle location information of the vehicle 1 and a location information of the corresponding circuit C that is stored in the storage device 33 (step S100).

Then, the management module 55 determines whether or not the vehicle 1 is stopped in the circuit C (step S110) based on the vehicle location information of the vehicle 1 and the location information of the circuit C acquired in the step S100. When the vehicle 1 is stopped in the circuit C (step S110: YES) , the management module 55, via the communication module 51, sends a command signal to confirm the user's agreement to a terms of service of the function setting application (circuit mode) related to a warranty and the like for the vehicle 1 to the mobile terminal 30 (function setting application) corresponding to the previously acquired user ID (step S120). After sending the command signal, the management module 55 checks a response from the mobile terminal 30 (user) (step S130) and determines whether the user agrees to the terms of service or not (step S140) .

When the user responds that he/she agrees to the terms of service (step S140: YES), the management module 55 sends an execution allowance notice to the user's mobile terminal 30 (function setting application) via the communication module 51 to allow the execution of the function setting application, that is, the selection of the above control contents (step S150), and then terminates the routine of Fig. 7. When the vehicle 1 is not in the circuit C (step S110: NO), the management module 55 sends an execution prohibition notification to the user's mobile terminal 30 (function setting application) via the communication module 51 to prohibit the execution of the function setting application, that is, the selection of the above control contents (step S115) and terminates the routine of Fig. 7. Further, when the user does not respond to agree to the terms of service or no response is received from the mobile terminal 30 (step S140: NO), the management module 55 sends the execution prohibition notice to the mobile terminal 30 (function setting application) of the user (step S115), and terminates the routine of Fig. 7.

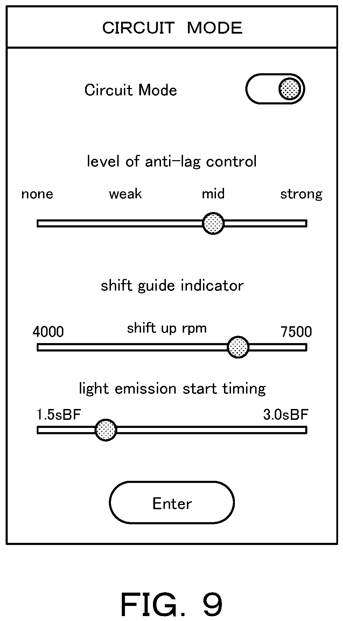

When the execution of the function setting application is allowed by the management server 50 and the user logs into the function setting application, the function setting module 35 of the mobile terminal 30 controls the display 32 to display a screen that allows the user to select the control contents from the plurality of options stored in the memory device 33 as shown in Fig. 8 (step S200) . When the function setting application of the version 1 or the version 2 is installed in the mobile terminal 30, the setting screen as shown in Fig. 9 is displayed on the display 32.

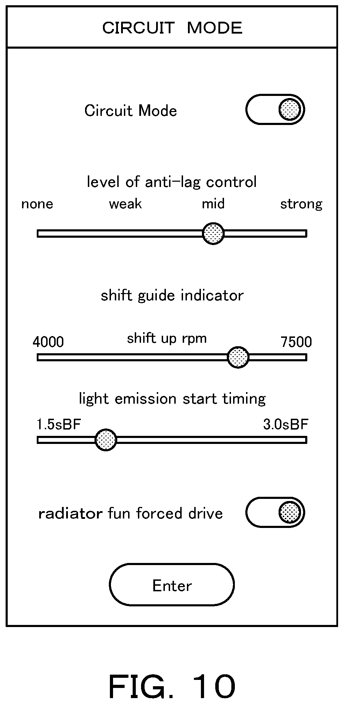

The settings screen shown in Fig. 9 includes an on/off button for the circuit mode, a slide bar for selecting the level of anti-lag control, a slide bar for selecting the shift-up rotational speed of the shift guide indicator 77, a slide bar for selecting the light emission start timing of the shift guide indicator 77, and a decision button. When the function setting application of the version 3 is installed in the mobile terminal 30, the setting screen shown in Figure 10 is displayed on the display 32 in accordance with the plurality of options corresponding to the version 3 of the function setting application stored in the memory device 33. The setting screen shown in Figure 10 allows the user to select "Strong +" on the slide bar for setting the level of anti-lag control and also allows the user to select the forced drive of the radiator fan, corresponding to the version 3 of the function setting application (predetermined software of the vehicle 1).

When the user selects the options on the setting screen and taps the decision button, the function setting module 35 acquires operation positions of the setting screen by the user (step S210), and acquires the IDs of the options selected by the user from the table stored in the memory unit 33 based on the acquired operation positions (step S220) . The function setting module 35 then creates an ID signal (frame) that in turn stores the user ID of the user logged into the function setting application, the ID indicating the circuit mode setting, the ID of the option for anti-lag control, the IDs of the options associated with the shift guide indicator 77 and the like (step S230). Hereinafter, the IDs other than the user ID included in the ID signal are referred to as "request IDs. Further, the function setting module 35 sends the ID signal created in step S230 to the management server 50 via the communication module 31 (step S240), and terminates the routine of Fig. 8.

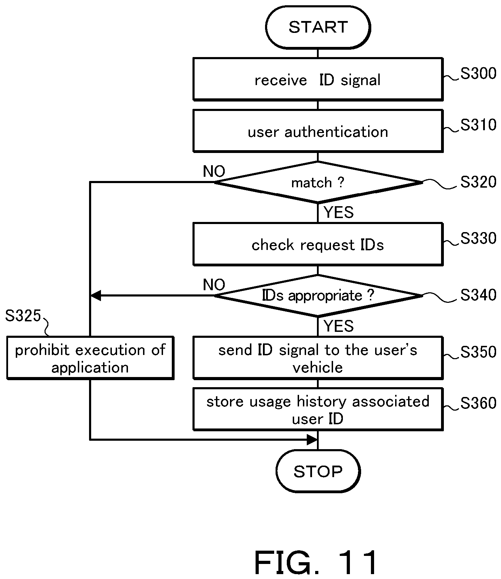

As shown in Figure 11, when the ID signal from the mobile terminal 30 is received by the communication module 51 of the management server 50 (step S300), the management module 55 of the management server 50 executes user authentication based on the user ID included in the ID signal (step S310) . When the user authentication determines that the user ID included in the ID signal matches the user ID of the user who earlier performed the procedure (step S320: YES), the management module 55 checks appropriateness of the request IDs included in the ID signal (step S330) . In step S330, the management module 55 checks, for example, whether all of the request IDs included in the ID signal are included in the control content setting table stored in the storage device 53. When the management module 55 determines that the request IDs are appropriate (step S340: YES), it sends the ID signal from the mobile terminal 30 to the vehicle 1 (in-vehicle communication device 15) of the user corresponding to the user ID included in the ID signal via the communication module 51 as is (step S350) . Further, the management module 55 stores the request IDs (option) selected by the user in the storage device 33 (database) as a usage history associated with the user ID (step S360), and then terminates the routine of Fig. 11.

On the other hand, when the above user authentication determines that the user ID included in the ID signal does not match the user ID of the user who earlier completed the procedure (step S320: NO), the management module 55 sends the execution prohibition notice to the corresponding mobile terminal 30 (function setting application) via the communication module 51 so as to prohibit the execution of the function setting application, that is, the selection of the above control contents (step S325), and terminates the routine in Fig. 11. When at least any one of the request IDs included in the ID signal is not included in the control content setting table stored in the memory device 53, the management module 55 determines that the ID signal is abnormal due to some factor (step S340: NO) . In this case, the management module 55 also sends the execution prohibition notice to the corresponding mobile terminal 30 (function setting application) via the communication module 51 (step S325) so as to prohibit the execution of the function setting application, that is, the selection of the above control contents, and terminates the routine in Fig. 11.

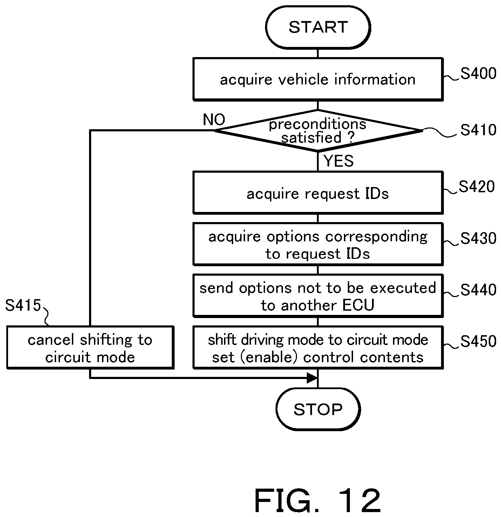

When the ID signal from the management server 50 is received by the in-vehicle communication device 15 of the vehicle 1, the PMECU 10 of the vehicle 1 acquires predetermined vehicle information such as values of various abnormality flags, a temperature of engine cooling water, and an atmospheric pressure (step S400), as shown in Fig. 12. Then, based on the vehicle information acquired in step S400, the PMECU 10 determines whether or not the preconditions for shifting the driving mode of the vehicle 1 to the circuit mode are satisfied (step S410). In step S410, the PMECU 10 determines that the above preconditions are satisfied when a communication state with the in-vehicle communication device 15 is normal, the engine 2, the motor generators MG1 and MG2, the battery 5, the PCU 6, the system main SMR and the like as the drive source are normal, the temperature of the engine cooling water is above a predetermined temperature, and the atmospheric pressure is above a predetermined pressure, such that the vehicle 1 is capable of normally driving.

When the preconditions for shifting the driving mode to the circuit mode are satisfied (step S410: YES), the PMECU 10 acquires the request IDs included in the ID signal received from the management server 50 (step S420). Further, the PMECU 10 acquires the plurality of options corresponding to the plurality of request IDs acquired in step S420 from the control content setting table stored in the memory device 17 (step S430) . The PMECU 10 also sends a signal indicating the options associated with the shift guide indicator 77 (options not to be executed) that are not executed by the PMECU 10 among the plurality of options acquired in step S430 to the meter ECU 14 (another in-vehicle control device) (step S440). The PMECU 10 then shifts the driving mode of the vehicle 1 to the circuit mode, sets (enables) the options other than the options sent to the meter ECU 14 to the control contents in the circuit mode (step S450), and terminates the routine in Fig. 12. The meter ECU 14 also sets (enables) the options related to the meter 7 received from the PMECU 10 to the control contents in the circuit mode.

On the other hand, when the preconditions for shifting the driving mode to the circuit mode are not satisfied (step S410: NO), the PMECU 10 cancels the shifting to the circuit mode, notifies the management server 50 that the driving mode was not shifted to the circuit mode via the in-vehicle communication device 15 (step S415) and terminates the routine of Fig. 12. In this case, the management server 50 sends a predetermined notification to the corresponding mobile terminal 30 (function setting application) so as to make the user of the mobile terminal 30 set the control contents again after a while. When the above preconditions are no longer satisfied after the driving mode is shifted to the circuit mode, the PMECU 10 immediately cancels the setting of the circuit mode and notif ies the management server 50 via the in-vehicle communication device 15 that the setting of the circuit mode is no longer possible.

As described above, the vehicle function setting system 20 is used to set the plurality of control contents to be executed by the PMECU 10 and the like upon the provision of the predetermined function of the vehicle 1, that is, the function to adapt the power characteristics and the like of the vehicle 1 to the circuit driving. The vehicle function setting system 20 includes the mobile terminal 30, the storage device (in-vehicle storage device) 17 mounted on the vehicle 1, and the management server 50 that exchanges information with the PMECU (in-vehicle control unit) 10 of the vehicle 1 and the mobile terminal 30. The mobile terminal 30 is installed with the function setting application that allows the user of the vehicle 1 to select the plurality of control contents. The storage device 17 stores the control content setting table that stores the plurality of options for each control content for each of the plurality of versions of the function setting application. Further, the mobile terminal 30 allows the user of the vehicle 1 to select each control content from the plurality of options corresponding to the version of the installed function setting application, and also sends the request IDs as information indicating the control contents selected by the user via the management server 50 to the PMECU 10 (steps S200-S240). The PMECU 10 then acquires the control contents corresponding to the request IDs from the mobile terminal 30 from the control content setting table stored in the storage device 17 (steps S400-S450).

This enables the user of vehicle 1 to set the desired options from the plurality of options corresponding to the version of the function setting application installed in the mobile terminal 30 to the plurality of control contents executed by the PMECU 10 by executing the function setting application on the mobile terminal 30. Further, when the function setting application installed on the mobile terminal 30 is upgraded to, for example, one newer version of the plurality of versions, the user is allowed to set the desired options from the plurality of options corresponding to the newer version of the function setting application on the mobile terminal 30 to the plurality of control contents to be executed by the PMECU 10. As a result, the vehicle function setting system 20 enables the user to easily and quickly upgrade (change specifications of) the predetermined functions provided in the vehicle 1.

The management server 50 of the vehicle function setting system 20 includes the storage device 53 that stores the same control content setting table as that stored in the storage device 17 of the vehicle 1. The control content setting table stored in the storage device 17 of the vehicle 1 and in the storage device 53 of the management server 50 stores the plurality of options that differ from each other, each with the unique ID, for each of the plurality of versions of the function setting application. The mobile terminal 30 includes the storage device (terminal storage device) 35 that stores the plurality of options corresponding to the versions of the installed function setting application, each associated with the unique ID, and the request IDs (ID signal), which are the IDs of the options selected by the user, are sent to the management server 50 (step S240). Further, the management server 50 sends the request IDs (ID signal) received from the mobile terminal 30 to the PMECU 10 mounted in the user's vehicle 1 (step S350), and the PMECU 10 acquires the plurality of control contents from the control content setting table stored in the storage device 17 based on the request IDs (ID signals) received from the management server 50 (step S350). The PMECU 10 acquires the plurality of control contents from the control content setting table stored in the storage device 17 based on the request IDs (ID signal) received from the management server 50 (steps S430, S450).

This allows the management server 50 to authenticate the user of the mobile terminal 30 (steps S310-S320) and check the appropriateness of the request IDs from the mobile terminal 30 (steps S330-S340), such that the plurality of control contents to be executed by the PMECU 10 are set appropriately. In addition, by assigning the unique ID to each of the plurality of options of each control content, information is smoothly exchanged among the mobile terminal 30, the management server 50 and the PMECU 10 while reducing the processing burden on these devices.

Further, in the control content setting table stored in the storage device 17 of the vehicle 1 and in the storage device 53 of the management server 50, the same set of the plurality of options is previously assigned to each of the plurality of versions of the function setting application. When the software related to the provision of the predetermined function installed in the PMECU 10 is upgraded, as shown in Figs. 5 and 6, at least one of writing of additional contents to the plurality of options that correspond to the version of the function setting application after the version of the upgraded predetermined software, and an addition of new options is executed in both the storage device 17 of the vehicle 1 and the storage device 53 of the management server 50.

This enables the user of the vehicle 1 to set the options including the additional content (for example, ID = 0x30-0x33, 0x40-0x44) or the new option (for example, ID = 0x50) to the control contents executed by the PMECU 10 via the mobile terminal 30 when the function setting application of the mobile terminal 30 is upgraded after the software installed on the PMECU 10 is upgraded. On the other hand, when the function setting application of the mobile terminal 30 is upgraded but the software installed on the PMECU 10 is not upgraded, in the control content setting tables of the management device 50 and the vehicle 1 (storage device 17), the plurality of options corresponding to one previous version of the function setting application are maintained as the plurality of options corresponding to the current version of the function setting application. Therefore, even if the software installed on the PMECU 10 is not upgraded and only the function setting application of the mobile terminal 30 is upgraded, the user of the vehicle 1 is allowed to continue to set the control contents to be executed by the PMECU 10 for the provision of the predetermined function from the mobile terminal 30. That is, the vehicle function setting system 20 enables users who do not wish to pay for software upgrades to continue to be allowed to set the plurality of control contents from the mobile terminal 30, while responding to the requests of users who wish to further improve the function of adapting the power characteristics and the like of the vehicle 1 for the circuit driving.

The vehicle function setting system 20 also allows the user to select option that could not be selected by executing the previous version of the function setting application by executing the upgraded function setting application. That is, by upgrading the function setting application installed in the mobile terminal 30, the user of the vehicle 1 is allowed to select the option (for example, ID = 0x30-0x33, 0x40-0x44) including additional content upgraded by upgrading the predetermined software installed in the PMECU 10 and the added new option (for example, radiator fan forced drive of ID = 0x50). The new options may be included in the control content setting table from the design phase of the vehicle 1 on the premise that they are prohibited from being selected in an initial stage. The selection of the new options at the mobile terminal 30 may be disabled at the stage when the upgraded function setting application is installed on the mobile terminal 30.

Further, the management module 55 of the management server 50 acquires the vehicle location information from the vehicle 1 as well as the location information of the circuit C (predetermined driving road) where the execution of the function setting application is allowed (step S100), and allows the execution of the function setting application on the mobile terminal 30 (step S150) on condition that the vehicle 1 is driven on the driving road of the circuit C (step S110: YES). In addition, the management server 50 allows the execution of the function setting application on the mobile terminal 30 (step S150) on the condition that the vehicle 1 is stopped at the circuit C and the user agrees to the terms of service of the function setting application (S110: YES, S140: YES). This makes it possible to prohibit the function to adapt the power characteristics and the like of the vehicle 1 to the circuit driving from being provided outside of the circuit C.

The control contents to be executed upon the circuit driving of the vehicle 1 include the control content related to the anti-lag control that changes the characteristics of the engine 2 which is the drive source of the vehicle 1 and the like. The PMECU 10 activates (step S450) the control contents corresponding to the request IDs from the management server 50 (mobile terminal 30) (step S450) on the condition that vehicle 1 is capable of normally driving (step S410: YES) . This ensures good safety when the function to adapt the power characteristics and the like of the vehicle 1 to the circuit driving. The control contents for changing the characteristics of the engine 2 which is the drive source of the vehicle 1 and the like may include, for example, the control content for changing the response of the output torque of the drive source to an accelerator opening degree in a non-linear manner. The control content setting table may store the plurality of options of control content related to such accelerator opening.

Further, the PMECU 10 acquires the options (control contents) corresponding to the request IDs from the mobile terminal 30 from the control content setting table stored in the storage device 17 (step S430), and sends the signal indicating the options (control contents) to be executed by the meter ECU 14 to the meter ECU 14 (step S440) . This enables the control contents executed in the vehicle 1 upon the provision of the function to adapt the power characteristics and the like of the vehicle 1 to the circuit driving to be easily increased while suppressing the increase in the cost of the vehicle 1.

The plurality of control contents included in the control content setting table includes the control contents for changing the display mode of the meter 7, in addition to the control content related to the anti-lag control for changing the characteristics of the engine 2 which is the drive source of the vehicle 1, and the like. This improves the power characteristics and maneuverability of the vehicle 1 upon the provision of the function to adapt the power characteristics and the like of the vehicle 1 to the circuit driving.

The predetermined function of the vehicle 1 subject to the vehicle function setting system 20 is not limited to the function to adapt the power characteristics and the like of the vehicle 1 to the circuit driving, but may be any function of the vehicle 1. The predetermined function of the vehicle 1 subject to the vehicle function setting system 20 may be provided on a private property other than the circuit C, or may be provided on a public road. Further, the control contents (options) to be executed in the vehicle 1 are not limited to those described above and may be arbitrarily defined according to the functions provided in the vehicle 1. The vehicle function setting system 20 also enables easy and quick downgrading (specification change) of the predetermined function provided in the vehicle 1 by tuning the control content setting table. When the in-vehicle communication device 15 of the vehicle 1 is capable of exchanging information with the mobile terminal 30 (see dotted line in Figure 1), the ID signal including the request ID may be sent directly from the mobile terminal 30 to the in-vehicle communication device 15 of the vehicle 1, without going through the management server 50. Further, the setting screen (UI) displayed on the display 32 of the mobile terminal 30 may be prepared in advance at the design phase to correspond to the final version of the function setting application (for example, the setting screen shown in Fig. 10) . The setting screen may be unmasked as the version of the function setting application (software of the vehicle 1) is upgraded to allow the selection of the option that include additional content or the new option.

As has been described above, the vehicle function setting system (20) of the present disclosure is configured to set at least one control content to be executed by the in-vehicle control device (10) upon the provision of the predetermined function of the vehicle (1). The vehicle function setting system (20) includes the mobile terminal (30) on which the application that enables the user of the vehicle (1) to select the control content is installed, and the in-vehicle storage device (17) that is mounted in the vehicle (1) and stores the plurality of options of the control content for each of the plurality of versions of the application. The mobile terminal (30) allows the user to select the control content from the plurality of options corresponding to the version of the installed application (step S200), and sends information indicating the control content selected by the user to the in-vehicle control device (10) (step S240). The in-vehicle control device (10) acquires the control content corresponding to the information from the mobile terminal (30) from the in-vehicle storage device (17) (steps S420-S450).

The function setting system of the present disclosure is configured to set at least one control content to be executed by the in-vehicle control device upon the provision of the predetermined function of the vehicle, and includes the mobile terminal of the user of the vehicle and the in-vehicle storage device that is mounted in the vehicle. The application that enables the user of the vehicle to select the control content is installed on the mobile terminal. The in-vehicle storage device stores the plurality of options of the control content for each of the plurality of versions of the application. The mobile terminal allows the user to select the control content from the plurality of options corresponding to the version of the installed application, and sends the information indicating the control content selected by the user to the in-vehicle control device. The in-vehicle control device acquires the control content corresponding to the information from the mobile terminal from the in-vehicle storage device. This allows the user of the vehicle to set the desired option from the plurality of options corresponding to the version of the application as the control content to be executed by the in-vehicle control device by executing the application on the mobile terminal. Further, when the application installed on the mobile terminal is upgraded to a newer version of the plurality of the versions, the user is allowed to set the desired option from the plurality of options corresponding to the newer version of the application in the mobile terminal as the control content to be executed by the in-vehicle control device. As a result, the vehicle function setting system of the present disclosure enables easy and quick specification change ("upgrade" or "downgrade") of the predetermined function provided in the vehicle.

The vehicle function setting system (20) may include the management device (50) that includes the storage device (53) that stores the table configured to store the plurality of options of the control content for each of the plurality of versions of the application. The management device (50) may exchange information with the in-vehicle control device (10) and the mobile terminal (30). The in-vehicle storage device (17) may store the table. The table may store the plurality of options that are different from each other, each of the options with the unique ID, for each of the plurality of versions of the application. The mobile terminal (30) may include the terminal storage device (33) that stores the plurality of options corresponding to the version of the installed application in association with the corresponding ID, and send the ID of the option selected by the user to the management device (50) (step S240). The management device (50) may send the ID received from the mobile terminal (30) to the in-vehicle control device (10) mounted in the vehicle (1) of the user (step S350) . The in-vehicle control device (10) may acquire the control content from the table stored in the in-vehicle storage device (17) based on the ID received from the management device (50) (Steps S420-S430).

This allows the management device to authenticate the user of the mobile terminal and to check suitability of the ID from the mobile terminal, thereby enabling proper setting of the control content to be executed by the in-vehicle control device. In addition, assigning the unique ID to each of the plurality of the control options reduces processing loads on the mobile terminal, the management device and the in-vehicle control device, thereby enabling smooth communication of information among these devices.

The same set of the plurality of options may be previously assigned to each of the plurality of versions of the application in the table stored in both the in-vehicle storage device (17) and the storage device (53) of the management device (50). When software related to the provision of the function installed on the in-vehicle control device (10) is upgraded, at least one of writing of the additional content to the plurality of options corresponding to the version of the application after the version of the upgraded software, and the addition of the new option is executed in both the in-vehicle storage device (17) and the storage device (53) of the management device (50).

This enables the user of the vehicle to set the option including the additional content or the new option to the control content executed by the in-vehicle control device via the mobile terminal when the application of the mobile terminal is upgraded after the software installed on the in-vehicle control device is upgraded. On the other hand, when the application of the mobile terminal is upgraded but the software installed on the in-vehicle control device is not upgraded, in the tables of the management device and the in-vehicle storage device, the plurality of options corresponding to one previous version of the application are maintained as the plurality of options corresponding to the current version of the application. Therefore, even if the software installed on the in-vehicle control device is not upgraded and only the application of the mobile terminal is upgraded, the user of the vehicle is allowed to continue to set the control content to be executed by the in-vehicle control device for the provision of a given function from the mobile terminal. The software installed on the in-vehicle control device may be upgraded at a maintenance factory and the like, or by OTA via wireless communication.

The software installed on the in-vehicle control device (10) may be upgraded for a fee.

This allows users who do not wish to upgrade their software for a fee to continue to be allowed to set the control contents from their mobile terminals, while satisfying user requests for further improvements in the functions provided in the vehicle.

The execution of the upgraded application may allow to select the option not selectable by the execution of the application of the previous version.

By upgrading the application installed on the mobile terminal, the user of the vehicle is allowed to newly select the option that has been prohibited to select, the option that includes the additional content that has been upgraded or added by upgrading the software installed on the in-vehicle control device, or the new option as the control content.

The management device (50) may acquire the vehicle location information from the vehicle (1) and also acquire the location information of the predetermined driving road (C) on which the application is allowed to be executed (step S100), and may allow the application to be executed on the mobile terminal (30) (step S150) on the condition that the vehicle (1) is driven on the predetermined driving road (C) (step S110: YES) .

This enables to prohibit the provision of the predetermined function of the vehicle to be provided except for the predetermined driving route, such as the circuit or the private property, for example.

The predetermined driving road may be the driving road of the circuit (C). The function may be to adapt at least the power characteristic of the vehicle (1) to the circuit driving. The management device (50) may allow the application to be executed on the mobile terminal (30) (step S150) on the condition that the vehicle (1) is stopped at the circuit and the user agrees to the terms and conditions of use of the application (S110: YES, S140: YES).

The control content may include the control content that changes the characteristic of the drive source (2, MG1, MG2) of the vehicle (1). The in-vehicle control device (10) may enable the control content corresponding to the information from the mobile terminal (30) (steps S420-S450) on the condition that the vehicle (1) is capable of normally driving (step S410: YES) .

This ensures good safety when the predetermined function is provided in the vehicle.

The in-vehicle control device (10) and another in-vehicle control device (14) may execute the plurality of control contents upon the provision of the predetermined function. The in-vehicle control device (10) may acquire the control content corresponding to the information from the mobile terminal (30) from the in-vehicle storage device (17) (step S430) and sends the signal indicating the corresponding control content to the another in-vehicle control device (14) (steps S440).

This enables the vehicle to easily increase the control contents executed in the vehicle upon the provision of the predetermined function, while reducing the cost increase of the vehicle.

The in-vehicle control device (10) may control the drive source (2, MG1, MG2) of the vehicle (1) and also execute the control content that changes the characteristics of the drive source (2, MG1, MG2). The another in-vehicle control device (14) may control the meter (7) of the vehicle (1) and execute the control content that changes the display mode of the meter (7).

This improves the power characteristics and the maneuverability of the vehicle upon the provision of the predetermined function.

The vehicle function setting method of the present disclosure sets at least one control content to be executed by the in-vehicle control device (10) upon the provision of the predetermined function of the vehicle (1). The method includes: installing the application that allows the user of the vehicle (1) to select the control content on the mobile terminal (30), and storing the plurality of options of the control content for each of the plurality of versions of the application in the in-vehicle storage device (17) mounted in the vehicle (1) ; allowing the user to select the control content from the plurality of options corresponding to the version of the application installed on the mobile terminal (30) (step S100), and sending information indicating the control content selected by the user on the mobile terminal (30) from the mobile terminal (30) to the in-vehicle control device (10) (step S240) ; and making the in-vehicle control device (10) acquire the control content corresponding to the information from the mobile terminal (30) from the in-vehicle storage device (17) (steps S420-S450).

This method enables easy and quick specification change ("upgrade" or "downgrade") of the predetermined function provided in the vehicle.

The vehicle (1) of the present disclosure provides the predetermined function and allows the mobile terminal (30) in which the application is installed a selection of the control content to be executed upon the provision of the function. The vehicle includes: the in-vehicle storage device (17) that stores the plurality of options of the control content for each of the plurality of versions of the application; and
the in-vehicle control device (10) that acquires the control content corresponding to information from the mobile terminal (30) from the in-vehicle storage device (17) and executes the control content upon the provision of the function. The selection of the option not selectable by the execution of the application of the previous version is allowed when the application installed on the mobile terminal (30) is upgraded.

By upgrading the application installed on the mobile terminal, the user of the vehicle of the present disclosure is allowed to select the option not selectable by the execution of the previous version of the application on the mobile terminal. As a result, the vehicle of the present disclosure enables easy and quick specification change ("upgrade" or "downgrade") of the predetermined function provided in the vehicle.

When the software related to the provision of the function installed on the in-vehicle control device (10) is upgraded and the application installed on the mobile terminal (30) is upgraded, at least one of the option including the additional content and the new option may be allowed to be selected.

The in-vehicle storage device (17) may previously store the same set of the plurality of options for each of the plurality of versions of the application. When the software installed on the in-vehicle control device (10) is upgraded, at least one of writing of the additional content to the plurality of options corresponding to the version of the application after the version of the upgraded software, and the addition of the new option may be executed with respect to the in-vehicle storage device (17).

The disclosure is not limited to the above embodiments in any sense but may be changed, altered or modified in various ways within the scope of extension of the disclosure. Additionally, the embodiments described above are only concrete examples of some aspect of the disclosure described in Summary and are not intended to limit the elements of the disclosure described in Summary.

### Industrial Applicability

The technique of the present disclosure is applicable to, for example, the manufacturing industry of the vehicle.

## Claims

1. A vehicle function setting system (20) configured to set at least one control content to be executed by an in-vehicle control device (10) upon a provision of a predetermined function of the vehicle (1), the vehicle function setting system (20) comprising:
a mobile terminal (30) on which an application that enables a user of the vehicle (1) to select the control content is installed; and
an in-vehicle storage device (17) that is mounted in the vehicle (1) and stores a plurality of options of the control content for each of a plurality of versions of the application, wherein the mobile terminal (30) allows the user to select the control content from the plurality of options corresponding to the version of the installed application (step S200), and sends information indicating the control content selected by the user to the in-vehicle control device (step S240), and
wherein the in-vehicle control device (10) acquires the control content corresponding to the information from the mobile terminal (30) from the in-vehicle storage device (17) (steps S420-S450).

2. The vehicle function setting system (20) according to claim 1, further comprising:
a management device (50) that includes a storage device (53) that stores a table configured to store the plurality of options of the control content for each of the plurality of versions of the application, the management device (50) exchanging information with the in-vehicle control device (10) and the mobile terminal (30),
wherein the in-vehicle storage device (17) stores the table,
wherein the table stores the plurality of options that are different from each other, each of the options with a unique ID, for each of the plurality of versions of the application,
wherein the mobile terminal (30) includes a terminal storage device(33) that stores the plurality of options corresponding to the version of the installed application in association with the corresponding ID, and sends the ID of the option selected by the user to the management device (50) (step S240),
wherein the management device (50) sends the ID received from the mobile terminal (30) to the in-vehicle control device (10) mounted in the vehicle (1) of the user (step S350), and
wherein the in-vehicle control device (10) acquires the control content from the table stored in the in-vehicle storage device (17) based on the ID received from the management device (50) (Steps S420-S430).

3. The vehicle function setting system (20) according to claim 1 or 2,
wherein the same set of the plurality of options is previously assigned to each of the plurality of versions of the application in the table stored in both the in-vehicle storage device (17) and in the storage device (53) of the management device (50), and
wherein when software related to the provision of the function installed on the in-vehicle control device (10) is upgraded, at least one of writing of an additional content to the plurality of options corresponding to the version of the application after the version of the upgraded software, and an addition of a new option is executed in both the in-vehicle storage device (17) and in the storage device (53) of the management device (50).

4. The vehicle function setting system (20) according to any one of claims 1 to 3,
wherein the software installed on the in-vehicle control device (10) is upgraded for a fee.

5. The vehicle function setting system (20) according to any one of claims 1 to 4,
wherein an execution of the upgraded application allows to select the option not selectable by the execution of the application of the previous version.

6. The vehicle function setting system (20) according to claim 2, taken in combination with any one of claims 1 to 5,
wherein the management device (50) acquires a vehicle location information from the vehicle (1) and also acquires a location information of a predetermined driving road (C) on which the application is allowed to be executed (step S100), and allows the application to be executed on the mobile terminal (30) (step S150) on the condition that the vehicle (1) is driven on the predetermined driving road (C) (step S110: YES).

7. The vehicle function setting system (20) according to claim 2, taken in combination with any one of claims 1 to 6,
wherein the predetermined driving road is a driving road of a circuit (C),
wherein the function is to adapt at least a power characteristic of the vehicle (1) to a circuit driving, and
wherein the management device (50) allows the application to be executed on the mobile terminal (30) (step S150) on the condition that the vehicle (1) is stopped at the circuit (C) and the user agrees to the terms and conditions of use of the application (S110: YES, S140: YES).

8. The vehicle function setting system (20) according to any one of claims 1 to 7,
wherein the control content includes a control content that changes a characteristic of a drive source (2, MG1, MG2) of the vehicle (1), and
wherein the in-vehicle control device (10) enables the control content corresponding to the information from the mobile terminal (30) (steps S420-S450) on the condition that the vehicle (1) is capable of normally driving (step S410: YES) .

9. The vehicle function setting system (20) according to any one claims 1 to 8,
wherein the in-vehicle control device (10) and another in-vehicle control device (14) execute a plurality of control contents upon the provision of the predetermined function, and
wherein the in-vehicle control device (10) acquires the control content corresponding to the information from the mobile terminal (30) from the in-vehicle storage device (17) (step S430) and sends a signal indicating the corresponding control content to the another in-vehicle control device (14) (steps S440).

10. The vehicle function setting system (20) according to claim 9,
wherein the in-vehicle control device (10) controls a drive source (2, MG1, MG2) of the vehicle (1) and also executes the control content that changes a characteristics of the drive source (2, MG1, MG2), and
wherein the another in-vehicle control device (14) controls a meter (7) of the vehicle (1) and executes the control content that changes a display mode of the meter (7).

11. A vehicle function setting method to set at least one control content to be executed by an in-vehicle control device (10) upon a provision of a predetermined function of a vehicle (1), the method comprising:
installing an application that allows a user of the vehicle (1) to select the control content on a mobile terminal (30), and storing a plurality of options of the control content for each of a plurality of versions of the application in an in-vehicle storage device (17) mounted in the vehicle (1);
allowing the user to select the control content from the plurality of options corresponding to the version of the application installed on the mobile terminal (30) (step S100), and sending information indicating the control content selected by the user on the mobile terminal (30) from the mobile terminal (30) to the in-vehicle control device (10) (step S240); and
making the in-vehicle control device (10) acquire the control content corresponding to the information from the mobile terminal (30) from the in-vehicle storage device (17) (steps S420-S450).

12. A vehicle (1) that provides a predetermined function and allows a mobile terminal (30) in which an application is installed a selection of a control content to be executed upon a provision of the function, the vehicle (1) comprising:
an in-vehicle storage device (17) that stores a plurality of options of the control content for each of a plurality of versions of the application; and
an in-vehicle control device (10) that acquires the control content corresponding to information from the mobile terminal (30) from the in-vehicle storage device (17) and executes the control content upon the provision of the function,
wherein the selection of the option not selectable by an execution of the application of a previous version is allowed when the application installed on the mobile terminal (30) is upgraded.

13. The vehicle (1) according to claim 12,
wherein when software related to the provision of the function installed on the in-vehicle control device (10) is upgraded and the application installed on the mobile terminal (30) is upgraded, at least one of the option including an additional content and a new option is allowed to be selected.

14. The vehicle (1) according to claim 13,
wherein the in-vehicle storage device (17) previously stores the same set of the plurality of options for each of the plurality of versions of the application, and
wherein when the software installed on the in-vehicle control device (10) is upgraded, at least one of writing of an additional content to the plurality of options corresponding to the version of the application after the version of the upgraded software, and an addition of a new option is executed with respect to the in-vehicle storage device (17).
